# EUROPEAN PATENT APPLICATION

(11) **EP 1 011 186 A2**
(43) Date of publication of application: **21.06.2000**
(21) Application number: 99203721.8
(22) Date of filing: 08.11.1999
(51) Int. Cl.: H02J 1/14

(54) **Electric load management circuit**

(30) Priority: 07.12.1998 GB 9826823; 05.02.1999 GB 9902499
(71) Applicant: Delphi Technologies, Inc., Troy, MI 48007 (US)
(72) Inventor: Volpone, Matthew V., 58256 Ennepetal (DE)
(74) Representative: Denton, Michael John

(57) **Abstract**

An electric load management circuit (10) in a motor vehicle comprising a shunt resistor (12) connectable to a power supply (20); a first electrical switch (14_{A}) connectable to a first electrical load (22_{A}) and connected in series with the shunt resistor between the shunt resistor and the first electrical load; a second electrical switch (14_{B}) connectable to a second electrical load (22_{B}), connected in series with the shunt resistor between the shunt resistor and the second electrical load, and connected in parallel with the first switch; and control means (16) monitoring the current (I_{SUM}) passing through the shunt resistor and controlling the operation of the first switch and the second switch dependent on the monitored current through the shunt resistor. Provides electrical load protection in a motor vehicle.

## Description

### Technical Field

The present invention relates to electric load management circuit in a motor vehicle, and has particular application for loads connected to a power supply supplying 42 volts.

### Background of the Invention

It is well known to provide protection for electrical loads in a motor vehicle using fuses which become open circuit when an excess current passes therethrough. There is a requirement to provide a power supply in a motor vehicle at 42 volts. At such a higher voltage, fuses may not provide the required protection for the electrical loads.

### Summary of the Invention

The object of the present invention is to provide an improved protection arrangement for the electrical loads.

An electric load management circuit in accordance with the present invention in a motor vehicle comprises a shunt resistor connectable to a power supply; a first electrical switch connectable to a first electrical load and connected in series with the shunt resistor between the shunt resistor and the first electrical load; a second electrical switch connectable to a second electrical load, connected in series with the shunt resistor between the shunt resistor and the second electrical load, and connected in parallel with the first switch; and control means monitoring the current passing through the shunt resistor and controlling the operation of the first switch and the second switch dependent on the monitored current through the shunt resistor.

The present invention provides protection for the electrical loads in a simple and easy arrangement, without the use of fuses or relays, by using only one shunt resistor. In a preferred arrangement, the switches are MOSFETs which, because of the arrangement of the present invention, do not require built in protection.

### Brief Description of the Drawings

The present invention will now be described, by way of example, with reference to the accompanying drawings, in which:-
Figure 1 is an electric load management circuit in accordance with the present invention for monitoring and controlling the supply of power to electric loads in a motor vehicle;
Figure 2 is a graph of current through the shunt resistor of the circuit of Figure 1 against time; and
Figure 3 is a circuit diagram of a preferred arrangement for part of the control unit of the circuit of Figure 1.

### Description of the Preferred Embodiment

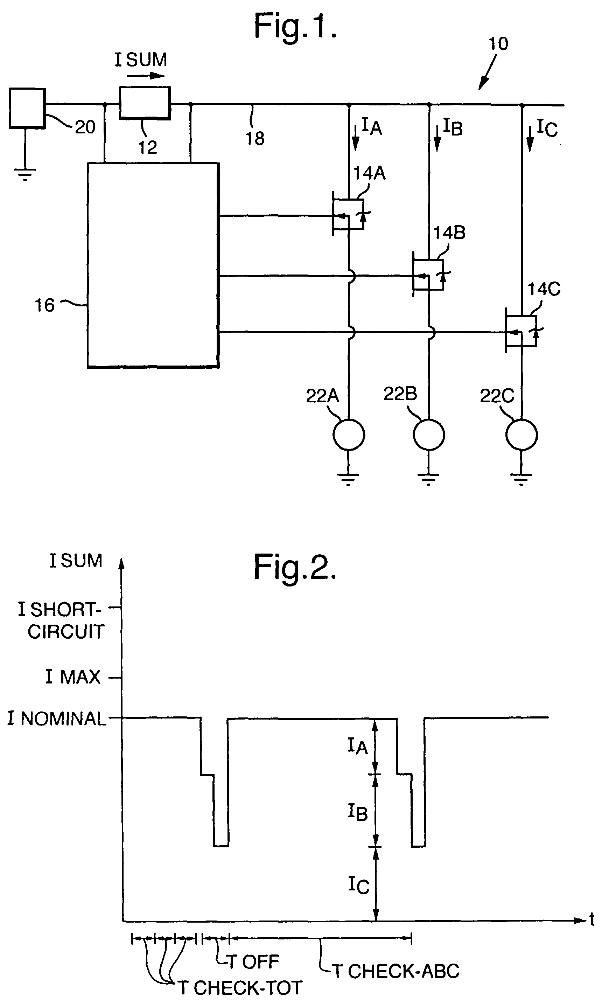

Referring to Figure 1, the electric load management circuit 10 comprises a shunt resistor 12, three MOSFETs 14_{A}, 14_{B}, 14_{C}, and a control unit 16. The control unit 16 preferably includes a microprocessor and a timer circuit. The shunt resistor 12 is in a line 18 between a power supply 20 supplying 42 volts and each MOSFET 14. Each MOSFET 14 is connected between the line 18 and an associated electrical load 22_{A}, 22_{B}, 22_{C}, and acts as a switch for the supply of power to the load.

The control unit 16 is connected across the shunt resistor 12 and monitors the level of current I_{SUM} passing through the shunt resistor. Each MOSFET 14 is also connected to the control unit 16, and the control unit acts to switch each MOSFET to control the supply of power to the associated load 22 dependent on external signals received by the control unit (for example, a manually operated switch, not shown), and dependent on the monitored current I_{SUM}.

The control unit 16 operates by monitoring the level of current I_{SUM} through the shunt resistor 12 every T_{CHECK-TOT} seconds (a predetermined time), and compares I_{SUM} to a predetermined maximum level I_{MAX}. If I_{SUM} is greater than I_{MAX}, the current through each MOSFET 14 is determined in sequence, as explained in more detail below. Additionally, every T_{CHECK-ABC} seconds (a predetermined time), the current through each MOSFET 14 is determined in sequence.

The current through each MOSFET 14 is determined as follows. The current through MOSFET 14_{A} is determined by switching off MOSFET 14_{A}, and measuring the change in current I_{A} through the shunt resistor 12. The change in current I_{A} is the current through MOSFET 14_{A}. Next, the current through MOSFET 14_{B} is determined by switching off MOSFET 14_{B}, and measuring the change in current I_{B} through the shunt resistor 12. The change in current I_{B} is the current through MOSFET 14_{B}. Next, the current through MOSFET 14_{C} is determined by measuring the current I_{C} through the shunt resistor 12. The current I_{C} is the current through MOSFET 14_{C}. Each of the determined currents I_{A}, I_{B}, and I_{C} is compared by the control unit 16 to a predetermined value associated with that current. If the determined currents I_{A}, I_{B}, or I_{C} are all less than the predetermined value, all of the MOSFETs 14 are turned on. If any of the determined currents I_{A}, I_{B}, or I_{C} is greater than the predetermined value, the associated MOSFET 14 is not turned on to prevent an unacceptably high current to the associated load 22. The time T_{OFF} for determining the current through each MOSFET 14 is less than T_{CHECK-ABC}.

The control unit 16 also continually compares I_{SUM} to a predetermined value I_{SHORT-CIRCUIT}. If I_{SUM} is greater than I_{SHORT-CIRCUIT}, a short circuit is assumed to exist, and all of the MOSFETs 14 are turned off Each MOSFET 14 is then switched on individually, and the current through the shunt resistor 12 is monitored by the control unit 16 to determine which load 22 created the short circuit. The associated MOSFET 14 is switched off, and the other MOSFETs are switched on.

The present invention only requires one shunt resistor to sense current, and it is not necessary to use MOSFETs with built-in protection. The present invention can be used in electrical systems in motor vehicles, and does not require fuses or relays. This has particular benefit for electrical systems which are connected to a power supply at 42 volts.

The above described arrangement uses three MOSFETs 14. It will be appreciated that the present invention can be adapted for use with any number of MOSFETS.

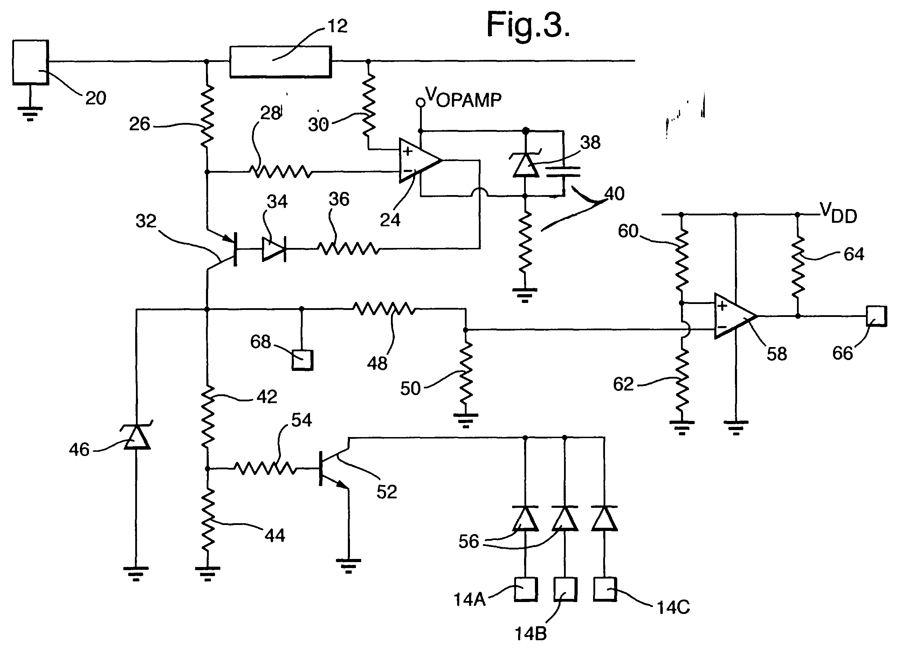

The control unit 16 preferably includes the circuit arrangement shown in Figure 3. This arrangement includes an operational amplifier 24 having a negative input connected to one side of the shunt resistor 12 by way of a pair of resistors 26,28 connected in series, and a positive input connected to the other side of the shunt resistor by way of a resistor 30. The output from the operational amplifier 24 is connected to the base of a transistor 32 by way of a diode 34 and resistor 36. The collector of the transistor 32 is connected to the junction between the resistors 26,28. The control voltage V_{OPAMP} on the operational amplifier 24 is the same as or greater than the voltage supplied by the power supply 20. A zener diode 38 and resistor-capacitor circuit 40 connected between the control voltage V_{OPAMP} and electrical ground, with the zener diode connected across the operational amplifier, provide a reduced control voltage (for example, 14 volts) across the operational amplifier.

The collector of the transistor 32 is connected to electrical ground by way of a first pair of resistors 42,44 in series; by way of a zener diode 46; and by way of a second pair of resistors 48,50 in series. The junction between the first pair of resistors 42,44 is connected to the base of a transistor 52 by way of a resistor 54. The emitter of the transistor 52 is connected to electrical ground. The collector of the transistor 52 is connected to each gate of the MOSFETs 14_{A}, 14_{B}, 14_{C} by way of diodes 56. The junction between the second pair of resistors 48,50 is connected to the negative input of an operational amplifier 58. The positive input of the operational amplifier 58 is connected to the junction between a pair of resistors 60,62 connected between electrical ground and a voltage supply V_{DD} of around 5 volts. The control inputs across the operational amplifier 58 are also connected between V_{DD} and electrical ground. The output from the operational amplifier 58 is connected to V_{DD} by way of a resistor 64.

The output of the operation amplifier 58 is also connected to an external interrupt 66 of the microprocessor of the control unit 16. The collector of the transistor 32 is connected to an analogue/digital converter input 68 of the microprocessor of the control unit 16.

The circuit arrangement of Figure 3 provides the current sensing for the present invention using low cost components. The transistor 52, resistor 54 and diodes 56 provide current limiting to the gates of the MOSFETs 14. The resistors 48,50,60-64, operational amplifier 58 and external interrupt 66 detect a short circuit situation. The remaining components are used to measure the current I_{SUM} through the shunt resistor 12.

Although in the above described embodiment MOSFETs 14 have been used as switches, it will be appreciated that other types of switches may be used besides MOSFETs.

## Claims

1. An electric load management circuit in a motor vehicle comprising a shunt resistor connectable to a power supply; a first electrical switch connectable to a first electrical load and connected in series with the shunt resistor between the shunt resistor and the first electrical load; a second electrical switch connectable to a second electrical load, connected in series with the shunt resistor between the shunt resistor and the second electrical load, and connected in parallel with the first switch; and control means monitoring the current passing through the shunt resistor and controlling the operation of the first switch and the second switch dependent on the monitored current through the shunt resistor.

2. An electric load management circuit as claimed in Claim 1, wherein the first and second switches are MOSFETs.

3. An electric load management circuit as claimed in Claim 1 or Claim 2, wherein when the control means determines that the current through the current through the shunt resistor is above a predetermined maximum, the control means determines the current through the first switch and the current through the second switch, and switches off the first switch or the second switch when the current therethrough is above a predetermined level.

4. An electric load management circuit as claimed in Claim 3, wherein the control means sequentially switches off the switches to determine the current therethrough.

5. An electric load management circuit as claimed in Claim 3, wherein the control means switches off the switches, and then sequentially switches on the switches to determine the current therethrough.
